# EUROPÄISCHE PATENTSCHRIFT

(11) **EP 1 554 179 B1**
(45) Veröffentlichungstag und Bekanntmachung des Hinweises auf die Patenterteilung: **09.08.2006**
(21) Anmeldenummer: 03807836.6
(22) Anmeldetag: 02.10.2003
(51) Int. Cl.: B65B 57/02, B65B 61/18

(54) **VERFAHREN UND VORRICHTUNG ZUM ERKENNEN EINES AUFREISSSTREIFENS AN EINER MATERIALBAHN**
METHOD AND DEVICE FOR RECOGNITION OF A TEAR-OFF STRIP ON A MATERIAL WEB
PROCEDE ET DISPOSITIF POUR DETECTER UNE BANDELETTE D'OUVERTURE SUR UNE BANDE DE MATIERE

(30) Priorität: 04.10.2002 DE 10246437
(43) Veröffentlichungstag der Anmeldung: 20.07.2005
(73) Patentinhaber: Focke & Co. (GmbH & Co. KG), 27283 Verden (DE)
(72) Erfinder: FOCKE, Heinz, verstorben (DE); CZARNOTTA, Michael, 28279 Bremen (DE)
(74) Vertreter: Bolte, Erich
(86) Internationale Anmeldenummer: PCT/EP2003/010961
(87) Internationale Veröffentlichungsnummer: WO 2004/033305

(56) Entgegenhaltungen:
- EP-A1- 0 779 219
- GB-A- 1 206 441
- US-A- 5 929 337
- US-A- 5 966 904
- US-A1- 2002 000 458
- US-A1- 2002 065 181

## Beschreibung

Die Erfindung betrifft ein Verfahren zum Erkennen eines an einer Material- bzw. Folienbahn angebrachten Aufreißstreifens oder Aufreißfadens mit Hilfe von Sensoren. Weiterhin betrifft die Erfindung eine Vorrichtung zur Durchführung des Verfahrens.

Bei der Fertigung von Packungen mit Außenumhüllung aus Folie, insbesondere Zigarettenpackungen oder Zigaretten-Gebindepackungen, wird die Folie mit einem Aufreißfaden oder Aufreißstreifen versehen, um bei der Ingebrauchnahme der Packung die Beseitigung der Außenumhüllung zu erleichtern. Der Aufreißstreifen wird auf eine fortlaufende Materialbahn bzw. Folienbahn aufgebracht und mit dieser verbunden. Danach werden die Zuschnitte für die Umhüllung der Packung von der Bahn abgetrennt (EP 1 209 083).

Das Vorhandensein und die korrekte Positionierung des Aufreißstreifens an der Materialbahn wird (fortlaufend) überprüft. Zu diesem Zweck werden beim Stand der Technik optoelektronische sowie kapazitive Sensoren eingesetzt, die im Bereich des Aufreißstreifens auf die Materialbahn gerichtet sind. Die Sensoren reagieren auf optisch erfassbare Markierungen am Aufreißstreifen.

Die optoelektronische Erfassung des Aufreißstreifens oder Aufreißfadens versagt, wenn keine ausreichenden optischen Kontraste vorhanden sind oder wenn beispielsweise die Materialbahn insgesamt oder teilweise bedruckt oder metallisiert ist.

Der Erfindung liegt die Aufgabe zugrunde, einen Aufreißfaden oder Aufreißstreifen berührungslos an einer Materialbahn bzw. Folienbahn zu erkennen, und zwar unabhängig von etwaigen optischen Kontrasten.

Zur Lösung dieser Aufgabe ist das erfindungsgemäße Verfahren durch folgende Merkmale gekennzeichnet:
a) die Sensoren zur Erkennung des Aufreißstreifens bzw. Aufreißfadens sind Ultraschallsender einerseits und Ultraschallempfänger andererseits, die je an unterschiedlichen Seiten der Materialbahn positioniert sind,
b) Ultraschallsender und Ultraschallempfänger sind im Wesentlichen exakt auf den Aufreißfaden bzw. Aufreißstreifen gerichtet,
c) der Ultraschallsender ist so ausgebildet, dass eine von diesem erzeugte Keule bzw. Ansprechkurve etwa der Breite des Aufreißstreifens entspricht,
d) der Ultraschallempfänger ist mit einer Auswerteeinheit verbunden, die auf Änderungen der Intensität der aufgenommenen Wellen reagiert.

Die Prüfung von dünnwandigen Werkstücken mittels Ultraschall ist grundsätzlich bekannt. Bisher wird dieses Erkennungsverfahren bei der Doppelbogen-Kontrolle eingesetzt, also bei der Prüfung von (gleichgroßen) Bogen aus dünnem Material, insbesondere Papier, hinsichtlich etwaiger Doppellagigkeit.

Der Erfindung liegt die Erkenntnis zugrunde, dass mittels Ultraschallsensoren die Position eines schmalen Materialstreifens, nämlich eines Aufreißstreifens oder Aufreißfadens auf einer fortlaufenden dünnen Materialbahn möglich ist, und zwar bei fortlaufender Prüfung. Dazu sind Sender und Empfänger gezielt auf den Aufreißstreifen bzw. Aufreißfaden bei exakter Position desselben gerichtet. Die Materialbahn mit Aufreißstreifen bzw. Aufreißfaden wird vorzugsweise kontinuierlich an Sender und Empfänger vorbeibewegt, derart, dass die Ultraschallwellen konzentriert auf den Bereich des Aufreißstreifens oder Aufreißfadens gerichtet sind.

Dabei kann nach den Erkenntnissen der Erfindung die Ansprechkurve des Empfängers (geringfügig) von der Breite des Aufreißstreifens abweichen, solange ein messbarer Unterschied bei der Aufnahme der Ultraschallwellen durch den Empfänger gegeben ist zur Differenzierung zwischen vorhandenem Aufreißstreifen und fehlendem Aufreißstreifen. Die Bemessung der Keule bzw. Ansprechkurve kann durch die Intensität des Senders bestimmt werden. Eine Besonderheit ist aber die erfindungsgemäße Ausgestaltung des Senders derart, dass dieser eine die freie Senderfläche reduzierende Blende aufweist, die eine gezielte, begrenzte Ansprechkurve bewirkt.

Weitere Einzelheiten der Erfindung betreffen die sinnvolle Anordnung der Prüforgane innerhalb einer (Verpackungs-)Maschine.

Weitere Besonderheiten der Erfindung werden nachfolgend anhand von Anwendungs- bzw. Ausführungsbeispielen erläutert. Es zeigt:

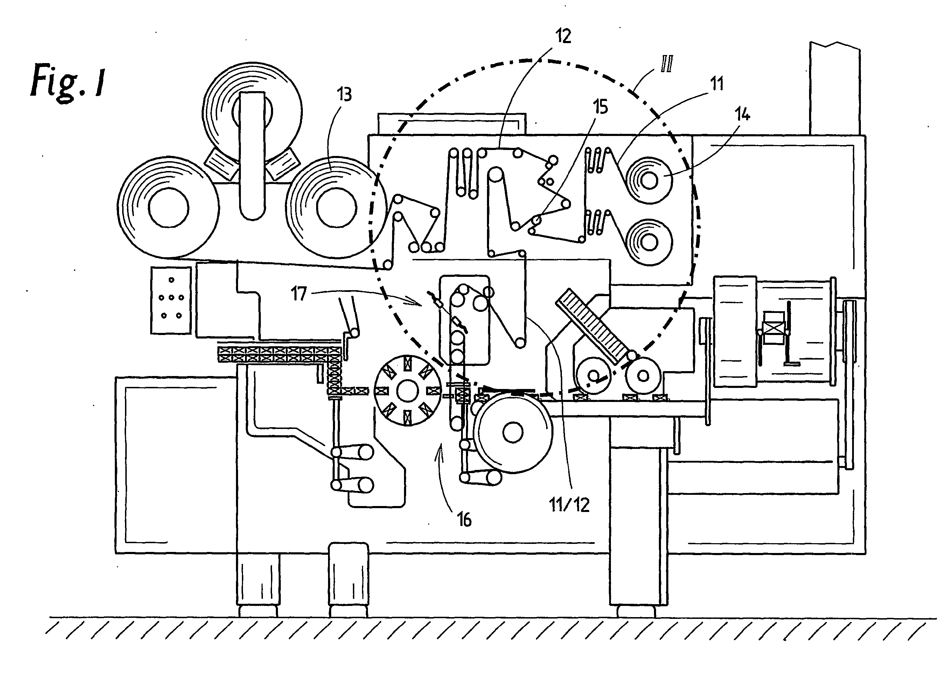

- Fig. 1: eine Verpackungsmaschine zum Einhüllen von (Zigaretten-)Packungen in eine Folienumhüllung, in schematischer Seitenansicht,

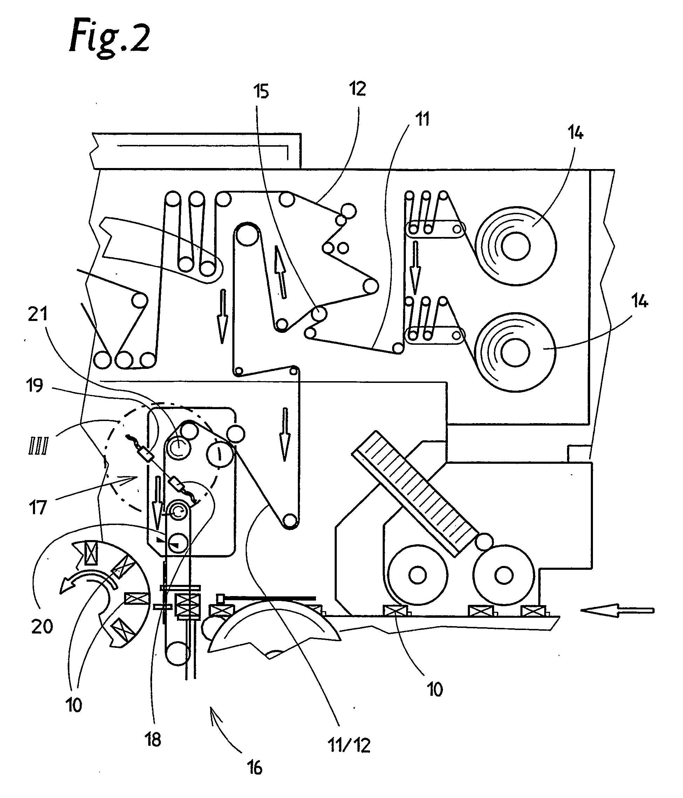

- Fig. 2: einen Ausschnitt II der Ansicht gemäß Fig. 1 in vergrößertem Maßstab,
- Fig. 3: eine nochmals vergrößerte Einzelheit III aus Fig. 2,
- Fig. 4: eine Einzelheit eines Ultraschallsenders, nämlich eine Draufsicht IV-IV der Fig. 3,
- Fig. 5: die schematisch dargestellte Arbeitsweise von Ultraschallsender und Ultra-schallempfänger bei fehlendem Aufreißstreifen,
- Fig. 6: eine entsprechende Darstellung bei korrektem Aufreißstreifen.

Bei dem gezeigten Ausführungsbeispiel geht es um die Herstellung von quaderförmigen Packungen 10, nämlich Zigarettenpackungen, die mit einer Außenumhüllung aus Folie versehen sind. Diese weist einen Aufreißstreifen 11 bzw. Aufreißfaden auf, der an einer bestimmten Stelle positioniert ist, um den Öffnungsvorgang der geschlossenen Packung zu ermöglichen.

Der Aufreißstreifen 11 wird zu diesem Zweck an einer fortlaufenden Materialbahn 12 aus Folie angebracht. Diese wird kontinuierlich von einer Bobine 13 abgezogen. Der fortlaufende Aufreißstreifen 11 wird von einer Streifenbobine 14 abgezogen und durch eine Andrückwalze 15 während gleichlaufenden Transports an die Materialbahn 12 angedrückt und mit dieser verbunden. Die Einheit aus Materialbahn 12 mit Aufreißstreifen 11 wird sodann einem Zuschnittaggregat 16 zugeführt. In dessen Bereich werden einzelne Zuschnitte ― mit Aufreißstreifen 11 ― von der Materialbahn 12 abgetrennt und jeweils um eine Packung 10 herumgefaltet. Die Vorrichtung zur Handhabung des Aufreißstreifens 11, der Materialbahn 12 und zum Herstellen der Zuschnitte entspricht.zweckmäßigerweise der EP 1 209 083.

Es ist zu prüfen, ob die Materialbahn 12 mit einem Aufreißstreifen 11 versehen und ob dieser korrekt positioniert ist. Hierfür dient ein Prüfaggregat 17. Dieses arbeitet berührungslos auf der Grundlage von Ultraschallwellen. Ein Ultraschallsender 18 und ein Ultraschallempfänger 19 sind an gegenüberliegenden Seiten der Materialbahn 12 positioniert. Der Ultraschallsender 18 richtet Ultraschallwellen gezielt auf die Materialbahn 12, und zwar im Bereich des Aufreißstreifens 11. Der gegenüberliegende Ultraschallempfänger 19 nimmt die Schallwellen auf. Sender, Empfänger und eine mit dem Empfänger verbundene Auswerteeinheit sind so ausgebildet, dass etwaige Schwankungen in der Intensität der empfangenen Ultraschallwellen ausgewertet und daraus Erkenntnisse über das Vorhandensein oder Fehlen eines Aufreißstreifens 11 gewonnen werden können. Die Wirkung des Prüfaggregats 17 ist derart, dass bei Vorhandensein eines Aufreißstreifens 11 eine Dämpfung der ausgesendeten Schallwellen durch den Aufreißstreifen 11 eintritt, der im Bereich des Ultraschallempfängers 19 zu einem deutlich verminderten Empfang führt.

Das Prüfaggregat 17 ist im Bereich eines vertikalen Bahnabschnitts 20 der Materialbahn 12 positioniert, und zwar im Anschluss an eine Umlenkwalze 21 unmittelbar oberhalb bzw. in Förderrichtung vor dem Zuschnittaggregat 16. Bei dem vorliegenden Ausführungsbeispiel ist demnach das Prüfaggregat 17 unmittelbar oberhalb eines Saugbandes 22 zum Transport der Materialbahn 12 bzw. der abgetrennten Zuschnitte im Bereich des Zuschnittaggregats 16 positioniert. Es geht darum, die Prüfung des Aufreißstreifens 11 möglichst unmittelbar vor dem Abtrennen des Zuschnitts durchzuführen. Vorteilhaft ist die Prüfung nach der letzten Umlenkwalze 21.

Sender und Empfänger sind so angeordnet, dass die Ultraschallwellen idealisiert entlang einer schräggerichteten Achse 23 gerichtet sind. Die Ultraschallwellen werden demnach unter einem spitzen Winkel zur Materialbahn 12 auf diese gerichtet. Der Ultraschallsender 18 befindet sich dabei auf der Seite des Aufreißstreifens 11 und der Ultraschallempfänger 19 gegenüberliegend auf der Seite der Materialbahn 12. Der Winkel der Achse 23 gegenüber der Ebene der Materialbahn 12 beträgt etwa zwischen 70° und 45°. Die Abstände von Sender und Empfänger von der Materialbahn 12 sind ebenfalls unterschiedlich. Der Ultraschallsender 18 ist mit geringem Abstand ― etwa 5mm bis 15mm ― von der Materialbahn 12 entfernt und der Empfänger 19 mit größerem Abstand von 15mm bis 65mm. Alternativ können Sender und Empfänger quer bzw. rechtwinklig zur Bahn 12 angeordnet sein.

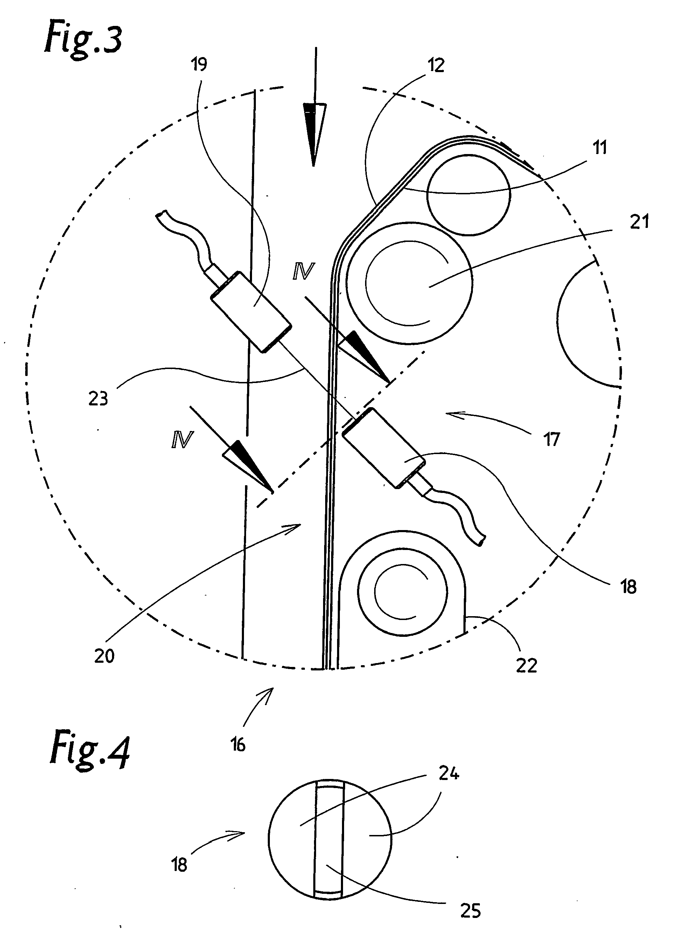

Die Ultraschallsensoren sind in besonderer Weise ausgebildet, so dass eine definierte, begrenzte Keule bzw. Ansprechkurve der Schallwellen entsteht, die exakt auf den Bereich des Aufreißstreifens 11 gerichtet sind. Die definierte Ansprechkurve ― etwa in der Breite des Aufreißstreifens 11 ― kann durch entsprechende Ausbildung des Ultraschallsenders 18 erzeugt werden. Insbesondere kann der Ultraschallsender 18 an der Austrittsseite mit einer Blende 24 versehen sein, die den Austritt der Schallwellen begrenzt. Bei dem in Fig. 4 gezeigten Ausführungsbeispiel ist die Blende 24 so ausgebildet, dass der (im Querschnitt kreisförmige) Ultraschallsender 18 einen mittigen, diametral verlaufenden Spalt 25 aufweist. Dieser bildet die Austrittsfläche für Ultraschallwellen. Der Spalt 25 erstreckt sich in Richtung des Aufreißstreifens 11. Durch die Blende 24 bzw. den Spalt 25 wird ein fokussierter Bereich der Schallwellen vom Ultraschallsender 18 im Bereich des Aufreißstreifens 11 auf die Materialbahn 12 gerichtet.

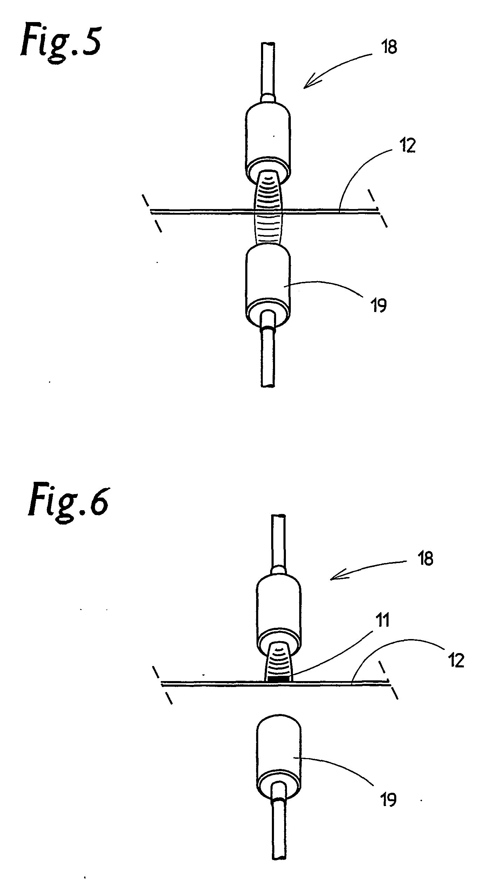

In Fig. 5 und Fig. 6 ist schematisch der Verlauf der "Keule" bzw. der Ansprechkurve der Ultraschallwellen gezeigt, wobei Fig. 5 den Fall eines fehlenden Aufreißstreifens zeigt mit durch die Materialbahn 12 weitgehend ungehinderten durchgehenden Schallwellen zeigt. Fig. 6 ist die Darstellung der korrekt ausgebildeten Materialbahn 12 mit Aufreißstreifen 11. Die vom Ultraschallsender 18 ausgehenden Schallwellen werden vollständig oder überwiegend von der Materialbahn 12 mit Aufreißstreifen 11 absorbiert, so dass der Ultraschallempfänger 19 keine Schallwellen oder stark gedämpfte Schallwellen empfängt.

Die Auswerteeinheit (nicht gezeigt) erzeugt ein Signal, wenn die Materialbahn im Sinne von Fig. 5 nicht korrekt mit einem Aufreißstreifen 11 versehen ist.

### Bezugszeichenliste

- 10: Packung
- 11: Aufreißstreifen
- 12: Materialbahn
- 13: Bobine
- 14: Streifenbobine
- 15: Andrückwalze
- 16: Zuschnittaggregat
- 17: Prüfaggregat
- 18: Ultraschallsender
- 19: Ultraschallempfänger
- 20: Bahnabschnitt
- 21: Umlenkwalze
- 22: Saugband
- 23: Achse
- 24: Blende
- 25: Spalt

## Patentansprüche

1. Verfahren zum Erkennen eines Aufreißstreifens (11) bzw. eines Aufreißfadens an einer Materialbahn (12) bzw. Folienbahn mit Hilfe von Sensoren, **gekennzeichnet durch** folgende Merkmale:
a) die Sensoren sind Ultraschallsender (18) einerseits und Ultraschallempfänger (19) andererseits, die an einander gegenüberliegenden Seiten der Materialbahn (12) positioniert sind,
b) Ultraschallsender (18) und Ultraschallempfänger (19) sind so positioniert, dass die zwischen Ultraschallsender (18) und Ultraschallempfänger (19) geförderte Materialbahn (12) im Wesentlichen ausschließlich im Bereich des Aufreißstreifens (11) bzw. Aufreißfadens von Ultraschallwellen erfasst ist,
c) der Ultraschallsender (18) ist so ausgebildet, dass eine von diesem erzeugte Keule bzw. Ansprechkurve etwa der Breite des Aufreißstreifens (11) entspricht,
d) der Ultraschallempfänger (19 ist mit einer Auswerteeinheit verbunden, die auf Änderungen der Intensität der aufgenommenen Ultraschallwellen reagiert.

2. Vorrichtung zur Durchführung des Verfahrens nach Anspruch 1, wobei ein Aufreißstreifen (11) bzw. Aufreißfaden fortlaufend an eine kontinuierlich geförderte Materialbahn (12) angelegt und mit dieser verbunden wird und danach Zuschnitte für eine Umhüllung von der Bahn abtrennbar sind, **dadurch gekennzeichnet, dass** im Anschluss an eine Verbindungsstation von Materialbahn (12) und Aufreißstreifen (11) eine Prüfeinrichtung zum Erkennen des Aufreißstreifens (11) ortsfest positioniert ist und die Folienbahn an dieser Prüfvorrichtung vorbeibewegbar ist, wobei die Prüfvorrichtung aus mindestens einem Ultraschallsender (18) und mindestens einem Ultraschallempfänger (19) besteht, wobei weiterhin Ultraschallsender (18) und Ultraschallempfänger (19) zu beiden Seiten der Materialbahn (12) positioniert sind, derart, dass vom Ultraschallsender (18) ausgehende Schallwellen im Wesentlichen ausschließlich im Bereich des Aufreißstreifens (11) auf die Materialbahn (12) treffen und ggf. vom gegenüberliegenden Ultraschallempfänger (19) aufnehmbar sind.

3. Vorrichtung nach Anspruch 2, **dadurch gekennzeichnet, dass** Ultraschallsender (18) und Ultraschallempfänger (19) im Bereich eines aufrechten Bahnabschnitts (20) der Materialbahn (12) positioniert sind, insbesondere unmittelbar oberhalb eines aufrechten Bahnförderers, nämlich eines Saugbands (22), eines Zuschnittaggregats (16), vorzugsweise einer Umlenkwalze (21) folgend.

4. Vorrichtung nach Anspruch 2 oder 3, **dadurch gekennzeichnet, dass** Ultraschallsender (18) und Ultraschallempfänger (19) in einer Schrägstellung zur Ebene der Materialbahn (12) gerichtet sind.

5. Vorrichtung nach Anspruch 2 oder einem der weiteren Ansprüche, **dadurch gekennzeichnet, dass** der Ultraschallsender (18) unterhalb des Ultraschallempfängers (19) angeordnet ist, vorzugsweise auf der den Aufreißstreifen (11) aufweisenden Seite der Materialbahn (12).

6. Vorrichtung nach Anspruch 2 oder einem der weiteren Ansprüche, **dadurch gekennzeichnet, dass** der Ultraschallsender (18) mit einer ausgangsseitigen Begrenzung versehen ist zur Beeinflussung der Charakteristik bzw. Breite der Ansprechkurve, insbesondere mit einer (schlitzartigen) Blende (24).

7. Vorrichtung nach Anspruch 6, **dadurch gekennzeichnet, dass** die Blende (24) einen sich diametral über den Ultraschallsender (18) erstreckenden Spalt (25) begrenzt, der in Richtung des Aufreißstreifens (11) verläuft.

## Claims

1. A method for detecting a tear-off strip (11) or a tear-off thread on a material web (12) or film web with the aid of sensors, **characterized by** the following features:
a) the sensors are ultrasonic transmitters (18), on the one hand, and ultrasonic receivers (19), on the other hand, which are positioned on different sides of the material web (12),
b) ultrasonic transmitter (18) and ultrasonic receiver (19) are positioned such that the material web (12) conveyed between ultrasonic transmitter (18) and ultrasonic receiver (19) is registered essentially by ultrasonic waves exclusively in the region of the tear-off strip (11) or tear-off thread,
c) the ultrasonic transmitter (18) is constructed in such a way that a lobe or response curve generated by the latter corresponds approximately to the width of the tear-off strip (11),
d) the ultrasonic receiver (19) is connected to an evaluation unit which reacts to changes in the intensity of the waves picked up.

2. An apparatus for implementing the method as claimed in Claim 1, a tear-off strip (11) or tear-off thread being laid continuously on a continuously conveyed material web (12) and joined to the latter and it then being possible for blanks for wrapping to be severed from the web, **characterized in that**, following a joining station of material web (12) and tear-off strip (11), a testing device for detecting the tear-off strip (11) is positioned in a fixed location and the film web can be moved past this testing apparatus, the testing apparatus comprising at least one ultrasonic transmitter (18) and at least one ultrasonic receiver (19), ultrasonic transmitter (18) and ultrasonic receiver (19) being positioned on both sides of the material web (12) in such a way that sound waves originating from the ultrasonic transmitter (18) strike essentially the material web (12) exclusively in the region of the tear-off strip (11) and, if appropriate, can be picked up by the opposite ultrasonic receiver (19).

3. The apparatus as claimed in Claim 2, **characterized in that** ultrasonic transmitter (18) and ultrasonic receiver (19) are positioned in the region of an upright section (20) of the material web (12), in particular immediately above an upright web conveyor, namely a suction belt (22) of a blank-cutting unit (16), preferably following a deflection roll (21).

4. The apparatus as claimed in Claim 2 or 3, **characterized in that** ultrasonic transmitter (18) and ultrasonic receiver (19) are oriented in an oblique position with respect to the plane of the material web (12).

5. The apparatus as claimed in Claim 2 or one of the further claims, **characterized in that** the ultrasonic transmitter (18) is arranged below the ultrasonic receiver (19), preferably on the side of the material web (12) having the tear-off strip (11).

6. The apparatus as claimed in Claim 2 or one of the further claims, **characterized in that** the ultrasonic transmitter (18) is provided with a limiting means on the outlet side in order to influence the characteristics or width of the response curve, in particular with a (slot-like) aperture stop (24).

7. The apparatus as claimed in Claim 6, **characterized in that** the aperture stop (24) bounds a gap (25) extending diametrically over the ultrasonic transmitter (18) and running in the direction of the tear-off strip (11).

## Revendications

1. Procédé de détection d'une bande déchirable (11) et/ou d'un ruban déchirable sur une bande de matériau (12) et/ou une bande de feuille à l'aide de capteurs, **caractérisé par** les caractéristiques suivantes :
a) les capteurs sont un émetteur d'ultrasons (18) d'une part et un récepteur d'ultrasons (19) d'autre part, qui sont positionnés sur les faces mutuellement opposées de la bande de matériau (12),
b) l'émetteur d'ultrasons (18) et le récepteur d'ultrasons (19) sont positionnés de sorte que la bande de matériau (12) acheminée entre l'émetteur d'ultrasons (18) et le récepteur d'ultrasons (19) est détectée par des ondes ultrasonores sensiblement exclusivement dans la zone de la bande déchirable (11) et/ou du ruban de déchirage,
c) l'émetteur d'ultrasons (18) est conçu de sorte qu'un lobe de rayonnement et/ou une courbe de réponse générés par celui-ci correspondent approximativement à la largeur de la bande déchirable (11),
d) le récepteur d'ultrasons (19) est relié à une unité d'analyse qui réagit aux modifications de l'intensité des ondes ultrasonores reçues.

2. Dispositif de réalisation du procédé selon la revendication 1, une bande déchirable (11) et/ou un ruban de déchirage étant posés de façon continue sur une bande de matériau (12) acheminée en continu et étant reliés à celle-ci et ensuite des pièces découpées pour une enveloppe peuvent être séparées de la bande, **caractérisé en ce qu'**un dispositif de contrôle destiné à détecter la bande déchirable (11) est positionné fixement immédiatement après un poste d'assemblage de la bande de matériau (12) et de la bande déchirable (11), et la bande de feuille peut être déplacée devant ce dispositif de contrôle, le dispositif de contrôle étant constitué d'au moins un émetteur d'ultrasons (18) et d'au moins un récepteur d'ultrasons (19), l'émetteur d'ultrasons (18) et le récepteur d'ultrasons (19) étant positionnés de part et d'autre de la bande de matériau (12), de telle sorte que les ondes sonores partant de l'émetteur d'ultrasons (18) heurtent sensiblement exclusivement la bande de matériau (12) dans la zone de la bande déchirable (11) et peuvent être éventuellement réceptionnées par des récepteurs d'ultrasons (19) opposés.

3. Dispositif selon la revendication 2, **caractérisé en ce que** les émetteurs d'ultrasons (18) et les récepteurs d'ultrasons (19) sont positionnés dans la zone d'une section de bande verticale (20) de la bande de matériau (12), notamment directement au-dessus d'une bande de transport verticale, à savoir d'une bande d'aspiration (22), d'un groupe de découpage (16), de préférence à la suite d'un cylindre de guidage (21).

4. Dispositif selon la revendication 2 ou 3, **caractérisé en ce que** l'émetteur d'ultrasons (18) et le récepteur d'ultrasons (19) sont orientés dans une position oblique par rapport au plan de la bande de matériau (12).

5. Dispositif selon la revendication 2 ou selon l'une quelconque des revendications précédentes, **caractérisé en ce que** l'émetteur d'ultrasons (18) est disposé au-dessous du récepteur d'ultrasons (19), de préférence sur la face de la bande de matériau (12) comprenant la bande déchirable (11).

6. Dispositif selon la revendication 2 ou selon l'une quelconque des revendications précédentes, **caractérisé en ce que** l'émetteur d'ultrasons (18) est pourvu d'une délimitation côté sortie destinée à influencer la caractéristique et/ou la largeur de la courbe de réponse, notamment d'un diaphragme (du type fente) (24).

7. Dispositif selon la revendication 6, **caractérisé en ce que** le diaphragme (24) délimite une fente (25) s'étendant de façon diamétralement opposée au-dessus de l'émetteur d'ultrasons (18), laquelle s'étend dans la direction de la bande déchirable (11).
